# EUROPEAN PATENT APPLICATION

(11) **EP 4 492 401 A1**
(43) Date of publication of application: **15.01.2025**
(21) Application number: 22937530.8
(22) Date of filing: 26.12.2022
(51) Int. Cl.: G21C 7/12, G21C 7/14, F16H 55/26

(54) **DRIVING MECHANISM, CONTROL ROD DRIVING DEVICE, AND NUCLEAR REACTOR**

(30) Priority: 13.04.2022 JP 2022066585
(71) Applicant: Mitsubishi Heavy Industries, Ltd., Tokyo 100-8332 (JP)
(72) Inventor: FUJITA, Jun, Tokyo 100-8332 (JP)
(74) Representative: Cabinet Beau de Loménie
(86) International application number: PCT/JP2022/048004
(87) International publication number: WO 2023/199556

(57) **Abstract**

To securely and easily disassemble and assemble a rack gear and a pinion gear. A drive mechanism 5 includes a rack gear 5A, a pinion gear 5B engaging with the rack gear 5A, a positioning member 5D fixed to a portion in the rack gear 5A where rack teeth 5Ab are not included, and a plurality of abutting members 5E disposed along a rotation direction of the pinion gear 5B. In a case in which at least one of the rack gear 5A and the pinion gear 5B is moved in a relative movement direction at the time when the rack gear 5A engages with the pinion gear 5B, abutment between the positioning member 5D and the abutting member 5E defines a rotational position of pinion teeth 5Bb of the pinion gear 5B to be an engaging position with the rack teeth 5Ab of the rack gear 5A.

## Description

### Field

The present invention relates to a drive mechanism, a control rod drive mechanism, and a nuclear reactor.

### Background

A pressurized water reactor (PWR) absorbs neutrons generated in a reactor core by a control rod to adjust the number of the neutrons and control nuclear reactor output. The control rod is put in or taken out from the reactor core by a control rod drive mechanism (CRDM).

As a control rod drive mechanism for a pressurized water reactor, for example, there is known a drive mechanism using a rack and a pinion disclosed in Patent Literature 1.

### Citation List

### Patent Literature

Patent Literature 1: Japanese Patent Application Laid-open No. 2022-023345

### Summary

### Technical Problem

In a drive mechanism with a rack and a pinion as disclosed in Patent Literature 1, in a case of disassembling and assembling a rack gear and a pinion gear at the time of maintenance, there is the possibility that the rack gear and the pinion gear cannot engage with each other if a rotation angle of the pinion gear is misaligned with respect to the rack gear. In a case of applying this drive mechanism to a control rod drive mechanism, it is difficult to manage engagement of all drive mechanisms that drive a large number of control rods, and intervention of workers is desired to be reduced because a radiation region is generated at the time of maintenance.

An object of the present invention is to solve the problem described above, and provide a drive mechanism, a control rod drive mechanism, and a nuclear reactor that can disassemble and assemble a rack gear and a pinion gear securely and easily. Solution to Problem

In order to achieve the above-described object, a drive mechanism according to one aspect of the present disclosure includes: a rack gear; a pinion gear engaging with the rack gear; a positioning member fixed to a portion in the rack gear where rack teeth are not included; and a plurality of abutting members disposed along a rotation direction of the pinion gear, wherein, in a case of causing at least one of the rack gear and the pinion gear to move in a relative movement direction at the time when the rack gear engages with the pinion gear, abutment between the positioning member and the abutting member defines a rotational position of pinion teeth of the pinion gear to be an engaging position with the rack teeth of the rack gear.

In order to achieve the above-described object, a control rod drive mechanism according to one aspect of the present disclosure includes: the drive mechanism described above; and a drive shaft disposed to be able to ascend or descend by the drive mechanism and coupled to a control rod that is able to be put in or taken out from a reactor core.

In order to achieve the above-described object, a nuclear reactor according to one aspect of the present disclosure includes: the control rod drive mechanism described above; a reactor core controlled by the control rod drive mechanism; and a nuclear reactor vessel in which the control rod drive mechanism and the reactor core are disposed.

### Advantageous Effects of Invention

According to the present disclosure, a rack gear and a pinion gear can be disassembled and assembled securely and easily.

### Brief Description of Drawings

FIG. 1 is a schematic diagram illustrating a nuclear reactor according to an embodiment.
FIG. 2 is a schematic side view illustrating a control rod drive mechanism according to the embodiment.
FIG. 3 is a partially enlarged cross-sectional view illustrating the control rod drive mechanism according to the embodiment.
FIG. 4 is a schematic perspective view illustrating a cable of an electromagnetic coil in the control rod drive mechanism according to the embodiment.
FIG. 5 is a schematic perspective view illustrating a drive mechanism according to the embodiment.
FIG. 6 is a schematic diagram illustrating a basic operation of the drive mechanism according to the embodiment.
FIG. 7 is a schematic diagram illustrating a basic operation of the drive mechanism according to the embodiment.
FIG. 8 is a schematic diagram illustrating a basic operation of the drive mechanism according to the embodiment.
FIG. 9 is a schematic diagram illustrating an operation of the drive mechanism according to the embodiment.
FIG. 10 is a schematic diagram illustrating an operation of the drive mechanism according to the embodiment.
FIG. 11 is a schematic diagram illustrating an operation of the drive mechanism according to the embodiment.

### Description of Embodiments

The following describes an embodiment according to the present disclosure in detail based on the drawings. The present invention is not limited to the embodiment. Constituent elements in the following embodiment include a constituent element that can be easily replaced by those skilled in the art, or substantially the same constituent element.

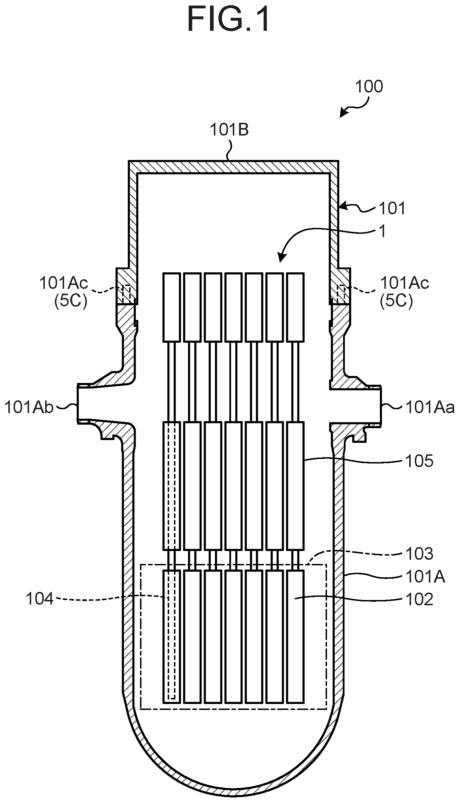

FIG. 1 is a schematic diagram illustrating a nuclear reactor according to the embodiment.

A nuclear reactor 100 illustrated in FIG. 1 is a pressurized water reactor used for a pressurized atomic power plant. In the pressurized atomic power plant, after heating light water as a primary coolant in the nuclear reactor 100, the high-temperature primary coolant is sent to a steam generator (not illustrated). The atomic power plant then generates electricity by causing the high-temperature primary coolant to perform heat exchange with a secondary coolant to evaporate the secondary coolant in the steam generator, and driving a power generator by sending steam of the evaporated secondary coolant to a turbine. The high-temperature primary coolant flowed into the steam generator is cooled by performing heat exchange with the secondary coolant, and returned to the nuclear reactor 100 to be heated to a high temperature again. On the other hand, the steam of the secondary coolant used for generating electricity in the turbine is cooled in a condenser to be returned to liquid, returned to the steam generator via a condensate water supply pipe, and becomes steam again by performing heat exchange with the primary coolant.

The nuclear reactor 100 includes a nuclear reactor vessel 101, which is a pressure vessel. In the nuclear reactor vessel 101, a nuclear reactor vessel lid 101B is fixed to a nuclear reactor vessel main body 101A by a plurality of stud bolts and nuts. The nuclear reactor vessel lid 101B is positioned and fixed with respect to the nuclear reactor vessel main body 101A by positioning pins 101Ac formed on an opening edge of the nuclear reactor vessel main body 101A. On the nuclear reactor vessel main body 101A, there are disposed an outlet nozzle 101Aa for sending the primary coolant to the steam generator, and an inlet nozzle 101Ab to which the primary coolant is returned, the primary coolant after being cooled by performing heat exchange with the secondary coolant in the steam generator. The nuclear reactor vessel 101 houses a control rod drive mechanism 1 and a fuel aggregate 102 inside. Details about the control rod drive mechanism 1 will be described later. The control rod drive mechanism 1 is disposed on an upper side of an inner part of the nuclear reactor vessel 101. The fuel aggregate 102 is nuclear fuel materials, and is disposed in a reactor core 103 disposed on a lower side of the inner part of the nuclear reactor vessel 101. Although not illustrated, the fuel aggregate 102 is configured to be vertically long by bundling a large number of fuel rods by a support lattice in a lattice shape. A large number of the fuel aggregates 102 are disposed in an erected state in which an upper end is oriented to an upper side and a lower end is oriented to a lower side in the reactor core 103. Control rods 104 are disposed inside the reactor core 103. The control rods 104 are inserted into the large number of fuel aggregates 102 from the upper side, and can be freely pulled out or inserted. The control rod 104 is formed of a control material that absorbs neutrons, and can perform, when being inserted into the fuel aggregate 102, control to prevent a critical state by absorbing neutrons generated by a fission reaction of the nuclear fuel materials in the fuel aggregate 102. On the other hand, when being pulled out from the inside of the fuel aggregate 102, the control rod 104 can increase the number of the neutrons in the nuclear reactor 100, and raise the reaction until the critical state is changed to rated output. Inside the nuclear reactor vessel 101, a large number of control rod guide pipes 105 for guiding ascent and descent of the control rods 104 are disposed between the reactor core 103 and the control rod drive mechanism 1.

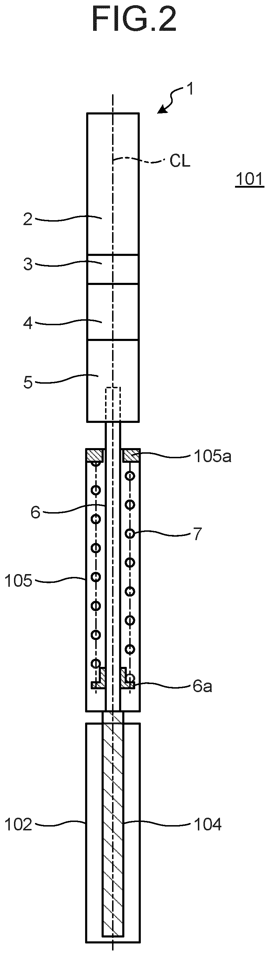

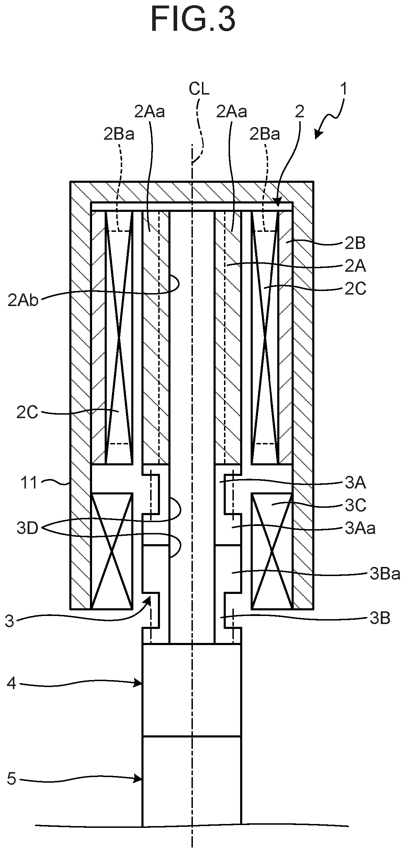

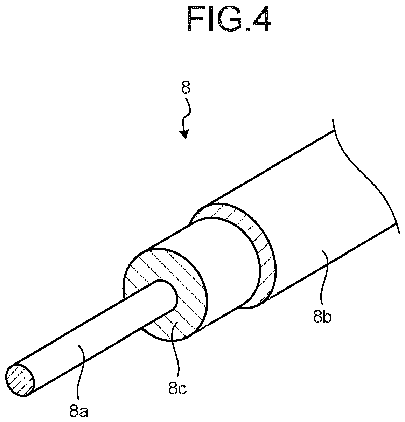

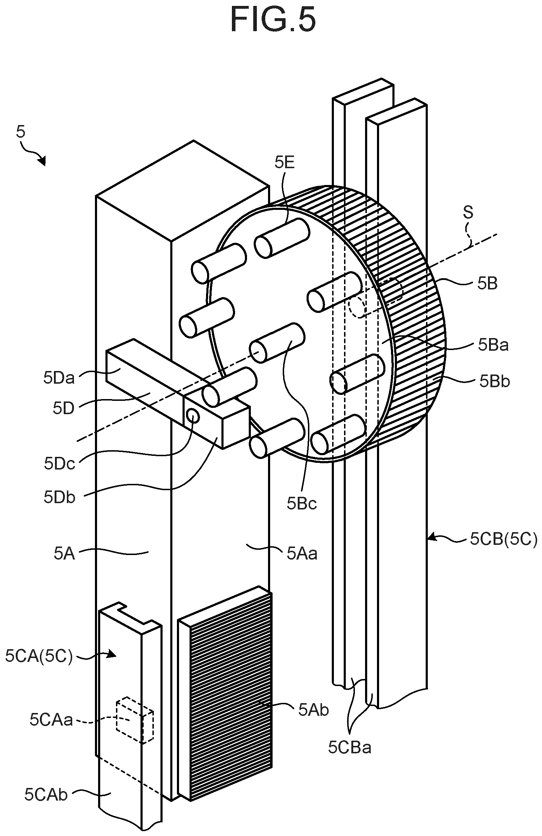

FIG. 2 is a schematic side view illustrating the control rod drive mechanism according to the embodiment. FIG. 3 is a partially enlarged cross-sectional view illustrating the control rod drive mechanism according to the embodiment. FIG. 4 is a schematic perspective view illustrating a cable of an electromagnetic coil in the control rod drive mechanism according to the embodiment. FIG. 5 is a schematic perspective view illustrating a drive mechanism according to the embodiment.

The control rod drive mechanism 1 is housed inside the nuclear reactor vessel 101 as described above. The control rod drive mechanism 1 performs control for pulling out or inserting the control rod 104 from/into the inside of the fuel aggregate 102 by moving the control rod 104 in an upper and lower direction. The control rod drive mechanism 1 includes a drive motor (drive part) 2, an electromagnetic clutch 3, a deceleration mechanism 4, a drive mechanism 5, a drive shaft 6, and an energizing unit 7.

As illustrated in FIG. 2, the drive motor 2 is disposed on an upper side in the control rod drive mechanism 1. As illustrated in FIG. 3, the drive motor 2 includes a rotor 2A and a stator 2B.

The rotor 2A is disposed to extend in the upper and lower direction on a center axis CL extending in the upper and lower direction. The upper and lower direction in which the center axis CL extends is also called an axial direction. The rotor 2A is disposed to be able to rotate about the center axis CL with respect to a case 11 housing the drive motor 2 and the electromagnetic clutch 3. The rotor 2A is made of magnetic material. The rotor 2A includes a salient pole 2Aa. The salient pole 2Aa is a projection extending radially inward to be separated from the center axis CL in the rotor 2A, and a plurality of the salient poles 2Aa are disposed at intervals in a circumferential direction around the center axis CL. In the rotor 2A, there is formed a hollow part 2Ab constituted of a through hole passing therethrough in the axial direction on the center axis CL.

The stator 2B is formed in a cylindrical shape about the center axis CL to surround the rotor 2A. The stator 2B is made of magnetic material. The stator 2B includes a plurality of core parts 2Ba extending radially inward toward the center axis CL to face the rotor 2A, the core parts 2Ba disposed at intervals in the circumferential direction about the center axis CL. In the stator 2B, an electromagnetic coil 2C is wound around each of the core parts 2Ba via an insulating material (not illustrated). In the stator 2B, the electromagnetic coil 2C is constituted of an inorganic insulation cable 8 illustrated in FIG. 4.

As illustrated in FIG. 4, the inorganic insulation cable 8 is obtained by surrounding a core wire 8a with a metal sheath 8b, and filling a space between the core wire 8a and the metal sheath 8b with an inorganic insulator 8c such as magnesium oxide, for example. The inorganic insulation cable 8 is also called a mineral insulated cable (MI cable). In the inorganic insulation cable 8 according to the present embodiment, for example, the metal sheath 8b is formed of Inconel 690 (registered trademark), which is heat-resistant and corrosion-resistant alloy excellent in heat resistance and corrosion resistance.

In the drive motor 2, the salient pole 2Aa of the rotor 2A is attracted to the core part 2Ba around which the electromagnetic coil 2C is wound due to attractive force of a magnetic field that is generated by causing a current to flow through the electromagnetic coil 2C of the stator 2B, and the rotor 2A rotates about the center axis CL. That is, the drive motor 2 constitutes a reluctance motor that causes the rotor 2A made of magnetic material to rotate by the attractive force of the magnetic field generated in the electromagnetic coil 2C of the stator 2B without using a permanent magnet.

As illustrated in FIG. 3, the electromagnetic clutch 3 includes a first magnetic pole 3A, a second magnetic pole 3B, and an electromagnetic coil 3C.

The first magnetic pole 3A is made of magnetic material, and fixed to the rotor 2A of the drive motor 2. Thus, the first magnetic pole 3A rotates following rotation of the rotor 2A of the drive motor 2. On the first magnetic pole 3A, there is formed an attraction part 3Aa projecting radially outward at a lower end in the axial direction and having a flat lower end face.

The second magnetic pole 3B is made of magnetic material to be able to be magnetically attached to the first magnetic pole 3A, and is disposed to be able to move in the axial direction with respect to the case 11. The second magnetic pole 3B is disposed to be able to rotate about the center axis CL with respect to the case 11. On the second magnetic pole 3B, there is formed an attraction part 3Ba projecting radially outward at an upper end in the axial direction and having a flat upper end face. The attraction part 3Ba is disposed so that the upper end face thereof is opposed to the lower end face of the attraction part 3Aa of the first magnetic pole 3A. A lower end of the second magnetic pole 3B is connected to the deceleration mechanism 4.

On the first magnetic pole 3A and the second magnetic pole 3B, there is formed a hollow part 3D constituted of a through hole passing therethrough in the axial direction on the center axis CL. The hollow part 3D is formed to have an inner diameter equal to that of the hollow part 2Ab formed in the rotor 2A of the drive motor 2, and communicates with the hollow part 2Ab.

The electromagnetic coil 3C is fixed to the case 11, and disposed to generate a magnetic field in the axial direction in the first magnetic pole 3A and the second magnetic pole 3B. The electromagnetic coil 3C is constituted of the inorganic insulation cable 8 illustrated in FIG. 4.

In the electromagnetic clutch 3, the magnetic field is generated in the axial direction by causing a current to flow through the electromagnetic coil 3C, and the magnetic field functions on the attraction part 3Aa of the first magnetic pole 3A and the attraction part 3Ba of the second magnetic pole 3B. When the magnetic field functions on the attraction part 3Aa and the attraction part 3Ba, attraction force by which they attract each other is generated, and the second magnetic pole 3B is attracted and adsorbed by the first magnetic pole 3A. When the second magnetic pole 3B is attracted by the first magnetic pole 3A, rotation of the drive motor 2 is transmitted to the deceleration mechanism 4 and the drive mechanism 5 via the first magnetic pole 3A and the second magnetic pole 3B. On the other hand, in the electromagnetic clutch 3, if a current is not caused to flow through the electromagnetic coil 3C, there is no function of the magnetic field on the attraction part 3Aa of the first magnetic pole 3A and the attraction part 3Ba of the second magnetic pole 3B, so that attraction between the first magnetic pole 3A and the second magnetic pole 3B is canceled. When the attraction between the first magnetic pole 3A and the second magnetic pole 3B is canceled, the rotation of the drive motor 2 is not transmitted to the deceleration mechanism 4 and the drive mechanism 5, so that the deceleration mechanism 4 and the drive mechanism 5 can freely rotate.

The deceleration mechanism 4 is disposed between the electromagnetic clutch 3 and the drive mechanism 5. The rotation of the drive motor 2 about the center axis CL is transmitted to the deceleration mechanism 4 via the electromagnetic clutch 3, and the deceleration mechanism 4 transmits this rotation to the drive mechanism 5 while decelerating it. Although not clearly illustrated, in the deceleration mechanism 4, a plurality of deceleration parts constituted of planet gear mechanisms are stacked and disposed in the axial direction, for example. Due to this configuration, the deceleration mechanism 4 includes a hollow part passing therethrough in the axial direction at the center. The hollow part is constituted of a through hole passing therethrough in the axial direction on the center axis CL, and formed to have an inner diameter equal to that of the hollow part 3D formed in the electromagnetic clutch 3 to communicate with the hollow part 3D.

The drive mechanism 5 is driven by the drive motor 2 in a state in which attraction is caused in the electromagnetic clutch 3, and causes the drive shaft 6 to ascend or descend. As illustrated in FIG. 5, the drive mechanism 5 includes a rack gear 5A, a pinion gear 5B, a guide part 5C, a positioning member 5D, and an abutting member 5E.

The rack gear 5A is formed to continuously extend in a linear shape along the upper and lower direction (axial direction) to be inserted through the hollow parts 2Ab and 3D described above. In the rack gear 5A, on a plate surface of a rack main body 5Aa formed in a long-plate shape, a large number of rack teeth 5Ab are formed along the upper and lower direction in which the rack main body 5Aa extends. The rack teeth 5Ab are formed on one plate surface of the rack gear 5A according to the embodiment. The rack teeth 5Ab are not disposed on an upper portion of the rack main body 5Aa. This rack gear 5A is disposed to be able to ascend or descend along the axial direction by the guide part 5C (first guide part 5CA). A lower end of the rack gear 5A is coupled to the drive shaft 6.

On the pinion gear 5B, pinion teeth 5Bb are formed along an outer peripheral surface of a pinion main body 5Ba having a disc shape. In the pinion gear 5B, the pinion main body 5Ba is fixed to a rotation shaft 5Bc extending in a direction orthogonal to the center axis CL. In the pinion gear 5B, rotation of the drive motor 2 is transmitted to the rotation shaft 5Bc through the electromagnetic clutch 3 and the deceleration mechanism 4. In the embodiment, the rotation of the drive motor 2 about the center axis CL is transmitted to the deceleration mechanism 4, so that the deceleration mechanism 4 is connected to the rotation shaft 5Bc via an axis converting mechanism (not illustrated) for transmitting the rotation to the rotation shaft 5Bc orthogonal to the center axis CL. In this pinion gear 5B, the pinion teeth 5Bb engage with the rack teeth 5Ab of the rack gear 5A. Due to this, when the rotation of the drive motor 2 is transmitted to the pinion gear 5B, the rack gear 5A ascends or descends along the axis direction. The pinion gear 5B is disposed to be able to ascend or descend along the axial direction by the guide part 5C (second guide part 5CB). FIG. 5 illustrates a state in which the pinion gear 5B has moved to an upper position than a position for engaging with the rack gear 5A.

The guide part 5C includes the first guide part 5CA that guides ascent and descent of the rack gear 5A, and the second guide part 5CB that guides ascent and descent of the pinion gear 5B.

The first guide part 5CA includes a slider 5CAa and a slide rail 5CAb. The slider 5CAa is fixed to each of opposed plate surfaces not including the rack teeth 5Ab of the rack main body 5Aa of the rack gear 5A. The slide rail 5CAb is formed to continuously extend in a linear shape along the upper and lower direction (axial direction) in parallel with the rack gear 5A. The slide rail 5CAb is fixed to the nuclear reactor vessel main body 101A of the nuclear reactor vessel 101. The slide rail 5CAb is assembled so that the slider 5CAa can ascend or descend in the axial direction. Thus, the first guide part 5CA guides the rack gear 5A to which the slider 5CAa is fixed to be able to ascend or descend in the axial direction via the slide rail 5CAb. The first guide part 5CA maintains an engagement distance of the rack gear 5A engaging with the pinion gear 5B by regulating movement of the slider 5CAa in a direction other than the axial direction by the slide rail 5CAb.

The second guide part 5CB includes a support rail 5CBa. The support rail 5CBa is formed to continuously extend in a linear shape along the upper and lower direction (axial direction) in parallel with the rack gear 5A. A pair of the support rails 5CBa are disposed to sandwich the rotation shaft 5Bc of the pinion gear 5B. The pair of support rails 5CBa are disposed at both end parts of the rotation shaft 5Bc passing through the pinion gear 5B. Thus, the second guide part 5CB guides the pinion gear 5B to be able to ascend or descend in the axial direction via the support rail 5CBa. Additionally, the second guide part 5CB maintains an engagement distance of the pinion gear 5B engaging with the rack gear 5A by regulating movement of the pinion gear 5B in a direction other than the axial direction by the support rail 5CBa.

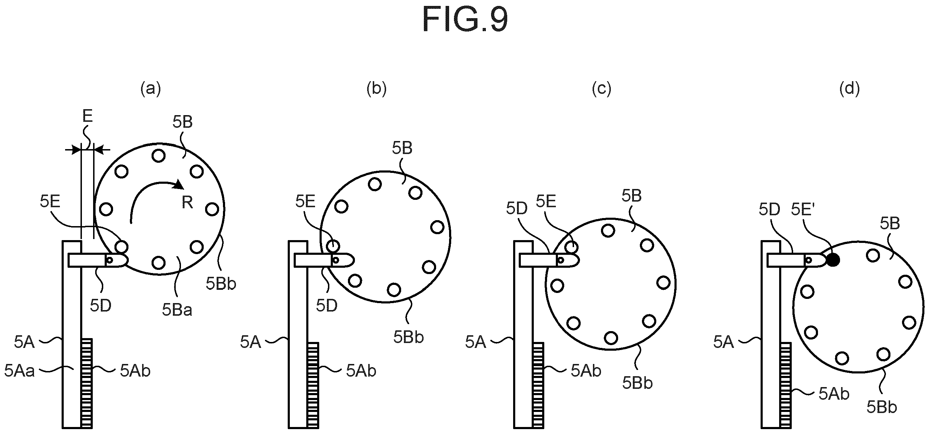

In this way, the guide part 5C maintains a positional relation between the rack gear 5A and the pinion gear 5B to guide ascent and descent of the rack gear 5A and the pinion gear 5B, and maintain an engagement gap E (refer to FIG. 9(a)) between the rack teeth 5Ab of the rack gear 5A and the pinion teeth 5Bb of the pinion gear 5B. Herein, the engagement gap E between the rack gear 5A and the pinion gear 5B is, for example, a distance between the rack main body 5Aa of the rack gear 5A and the pinion main body 5Ba of the pinion gear 5B as illustrated in FIG. 9(a) for causing the rack teeth 5Ab to engage with the pinion teeth 5Bb to transmit rotation of the pinion gear 5B to the rack gear 5A, and is desirably a distance in a relation in which contact points of the rack teeth 5Ab and the pinion teeth 5Bb are present on a common tangent line.

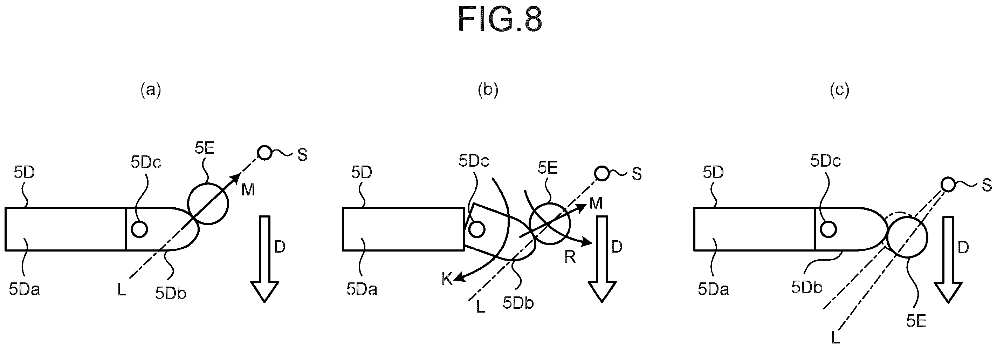

The positioning member 5D is disposed on the rack gear 5A. The positioning member 5D is formed in a rod shape, and disposed so that a base end portion 5Da is fixed to an upper side of the rack main body 5Aa that is a portion where the rack teeth 5Ab are not included, and a front end portion 5Db extends toward the pinion gear 5B side. In the positioning member 5D, the front end portion 5Db is coupled to the base end portion 5Da via a shaft 5Dc, and the positioning member 5D is formed to be bendable in the upper and lower direction in which the rack gear 5A and the pinion gear 5B ascend or descend (refer to FIG. 8(b)). The positioning member 5D is energized by elastic force of a spring and the like so that the front end portion 5Db is bent with respect to the base end portion 5Da due to external force, and can return to a linear shape along a horizontal direction when the external force is eliminated. The positioning member 5D is caused to have a length with which a front end of the front end portion 5Db does not reach a rotation center S of the rotation shaft 5Bc of the pinion gear 5B when the rack gear 5A and the pinion gear 5B have a relation of the engagement gap E.

The abutting member 5E is disposed on the pinion gear 5B. The abutting member 5E is fixed to the pinion main body 5Ba, and formed in a rod shape extending in parallel with a direction in which the rotation center S of the rotation shaft 5Bc extends. A plurality of (in the embodiment, eight) the abutting members 5E are disposed at regular intervals along a rotation direction of the pinion gear 5B about the rotation shaft 5Bc as the center. Assuming that the number of the abutting members 5E is B and the number of the pinion teeth 5Bb is A, A > B is established where A and B are natural numbers, and a relation of B × α = A is satisfied. α is a natural number. The abutting member 5E ascends or descends together with the pinion gear 5B, and rotationally moves around the rotation shaft 5Bc together with the pinion gear 5B. The abutting member 5E is disposed to be able to abut on the front end portion 5Db of the positioning member 5D in a range in which the positioning member 5D extends when the pinion gear 5B ascends or descends. The positioning member 5D is disposed at a portion in the rack gear 5A where the rack teeth 5Ab are not included, so that the abutting member 5E abuts on the positioning member 5D at the portion having no rack tooth 5Ab. The positioning member 5D has the length with which the front end of the front end portion 5Db does not reach the rotation center S of the rotation shaft 5Bc of the pinion gear 5B when the rack gear 5A and the pinion gear 5B have a relation of the engagement gap E, so that the abutting member 5E positioned closer to the rack gear 5A than the rotation center S abuts on the front end portion 5Db of the positioning member 5D. When the abutting member 5E abuts on the positioning member 5D, the pinion gear 5B rotates about the rotation shaft 5Bc.

The drive shaft 6 is coupled to a lower end of the rack gear 5A of the drive mechanism 5, and inserted into the control rod guide pipe 105 as illustrated in FIG. 2. The drive shaft 6 may be configured as the rack gear 5A. Thus, the drive shaft 6 is disposed to be able to ascend or descend in the axial direction on the center axis CL with respect to the case 11. In ascent and descent, the drive shaft 6 is inserted through the hollow part 3D formed in the first magnetic pole 3A and the second magnetic pole 3B of the electromagnetic clutch 3, the hollow part 2Ab formed in the rotor 2A, and the hollow part of the deceleration mechanism 4. The drive shaft 6 that is coupled to the rack gear 5A or configured as the rack gear 5A is caused to ascend or descend in the upper and lower direction by the drive mechanism 5 and the control rod drive mechanism 1. The control rod 104 is coupled to a lower end of the drive shaft 6.

Thus, when attraction is caused in the electromagnetic clutch 3 and transmission of driving force from the drive motor 2 is connected to the drive mechanism 5 and the control rod drive mechanism 1, rotation in one direction is transmitted thereto by the drive motor 2 to raise the drive shaft 6 (control rod 104). When attraction is caused in the electromagnetic clutch 3 and transmission of driving force from the drive motor 2 is connected to the drive mechanism 5 and the control rod drive mechanism 1, rotation in another direction is transmitted thereto by the drive motor 2 to lower the drive shaft 6 (control rod 104). In the drive mechanism 5 and the control rod drive mechanism 1, when attraction is caused in the electromagnetic clutch 3 and the drive mechanism 5 is connected to the drive motor 2, the drive shaft 6 (control rod 104) is held at a predetermined position after being raised or lowered in a state in which the drive motor 2 is not driven. In the drive mechanism 5 and the control rod drive mechanism 1, when transmission of driving force from the drive motor 2 is disconnected in a state in which attraction of the electromagnetic clutch 3 is canceled, respective parts of the drive mechanism 5 are allowed to freely rotate, the drive shaft 6 is allowed to freely descend, and the control rod 104 is allowed to freely fall together with the drive shaft 6. Thus, a disconnected state of the electromagnetic clutch 3 compensates for scram action in which the control rod 104 freely falls, and control is performed so that the control rod 104 is inserted into the fuel aggregate 102 to suppress a fission reaction of nuclear fuel materials in the fuel aggregate 102 and prevent a critical state.

As illustrated in FIG. 2, the energizing unit 7 is disposed in the control rod guide pipe 105 in the present embodiment. The energizing unit 7 constitutes a compression spring that is disposed inside the control rod guide pipe 105, and constantly energizes the drive shaft 6 inserted through the control rod guide pipe 105 toward the reactor core 103 side on the lower side. The energizing unit 7 as the compression spring is disposed so that an upper end thereof is hooked on an engagement part 105a at an upper end of an inner part of the control rod guide pipe 105, and a lower end thereof is hooked on an engagement part 6a of the drive shaft 6 inside the control rod guide pipe 105. Thus, when transmission of the driving force from the drive motor 2 is disconnected in a state in which attraction of the electromagnetic clutch 3 is canceled, the energizing unit 7 encourages a free descent of the drive shaft 6, and encourages a free fall of the control rod 104 together with the drive shaft 6. In the state in which attraction of the electromagnetic clutch 3 is canceled, a load of engagement between the deceleration mechanism 4 and the drive mechanism 5 is generated. However, the energizing unit 7 encourages a free descent of the drive shaft 6 against the load, and encourages a free fall of the control rod 104 together with the drive shaft 6. In a case of assuming a nuclear reactor for a ship propulsion reactor, working of the energizing unit 7 as described above has a function of securely inserting the control rod 104 into the inside of the fuel aggregate 102 even when a phenomenon such as tilting, swinging, or overturning of the nuclear reactor (ship) is caused.

The following describes an operation of the drive mechanism 5.

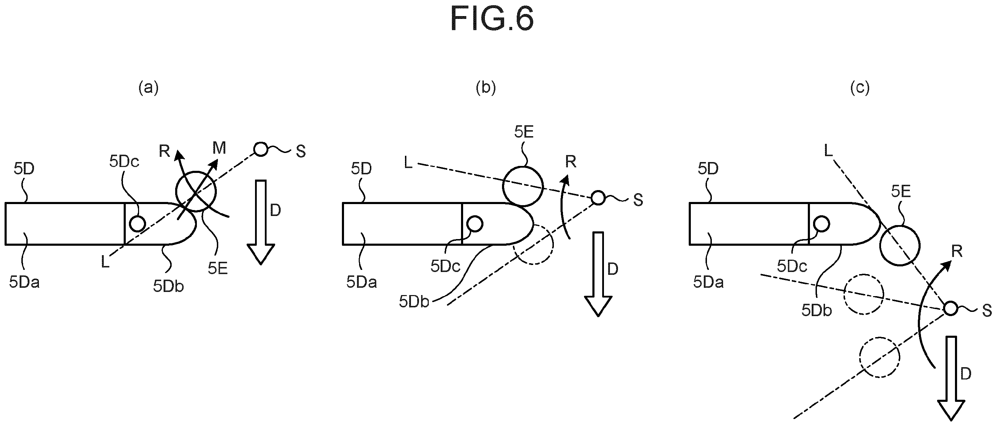

FIG. 6, FIG. 7, and FIG. 8 illustrate a basic operation of the drive mechanism 5. In FIG. 6 to FIG. 8, it is assumed that the positioning member 5D (rack gear 5A) is fixed, and the abutting member 5E (pinion gear 5B) is lowered as indicated by an arrow D by being guided by the guide part 5C.

In the basic operation illustrated in FIG. 6, as illustrated in FIG. 6(a), in a case of a positional relation in which the abutting member 5E abuts on the positioning member 5D on a lower side of a reference line L orthogonal to the rotation shaft 5Bc and passing through the rotation center S of the rotation shaft 5Bc and the center of the abutting member 5E, force M is generated in a normal direction of the abutting member 5E at a contact portion between the positioning member 5D and the abutting member 5E. The abutting member 5E abuts on the positioning member 5D on the lower side of the reference line L, so that the force M functions to raise the abutting member 5E upward. Due to this, moment R is generated in the abutting member 5E to rotate clockwise around the rotation shaft 5Bc as in FIG. 6(a). The abutting member 5E then rotates clockwise together with the pinion gear 5B to be pushed up by the positioning member 5D as illustrated in FIG. 6(b). The abutting member 5E then moves to an upper side than the rotation center S of the rotation shaft 5Bc due to further clockwise rotation. After a while, as illustrated in FIG. 6(c), the abutting member 5E reaches a position where the length of the positioning member 5D does not reach, is separated from the front end of the positioning member 5D, and is continuously lowered, but stops rotating together with the pinion gear 5B.

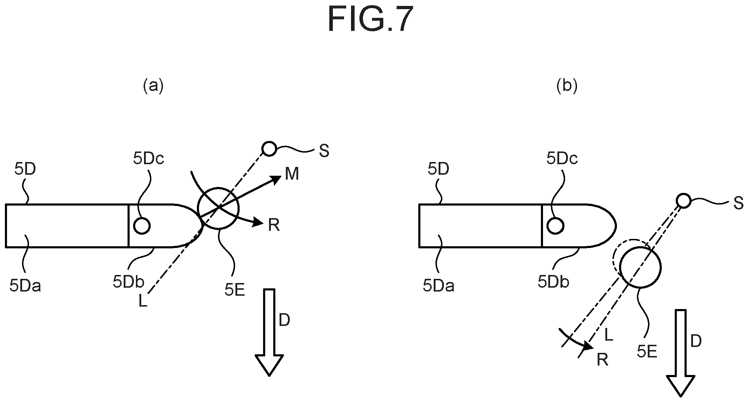

In the basic operation illustrated in FIG. 7, as illustrated in FIG. 7(a), in a case of a positional relation in which the abutting member 5E abuts on the positioning member 5D on an upper side of the reference line L, the force M functions to lower the abutting member 5E downward because the abutting member 5E abuts on the positioning member 5D on the upper side of the reference line L. Due to this, the moment R is generated in the abutting member 5E to rotate counterclockwise around the rotation shaft 5Bc as in FIG. 7(a). The abutting member 5E then rotates counterclockwise together with the pinion gear 5B to be pushed down by the positioning member 5D as illustrated in FIG. 7(a). After a while, as illustrated in FIG. 7(b), the abutting member 5E reaches a position where the length of the positioning member 5D does not reach, is separated from the front end of the positioning member 5D, and is continuously lowered, but stops rotating together with the pinion gear 5B.

In the basic operation illustrated in FIG. 8, as illustrated in FIG. 8(a), in a case of a positional relation in which the abutting member 5E abuts on the positioning member 5D on the reference line L, the force M does not function to raise or lower the abutting member 5E because the force M acts along the reference line L. Thus, the moment R to rotate around the rotation shaft 5Bc is not generated in the abutting member 5E. Thereafter, when the abutting member 5E descends together with the pinion gear 5B, as illustrated in FIG. 8(b), the front end portion 5Db of the positioning member 5D is bent toward the lower side (in a direction of an arrow K in FIG. 8(b)). The abutting member 5E then abuts on the positioning member 5D on the upper side of the reference line L, and the moment R is generated in the abutting member 5E to rotate counterclockwise around the rotation shaft 5Bc as in FIG. 8(b). The abutting member 5E then rotates counterclockwise together with the pinion gear 5B to be pushed down by the positioning member 5D as illustrated in FIG. 8(b). After a while, as illustrated in FIG. 8(c), the abutting member 5E reaches a position where the positioning member 5D does not reach, is separated from the front end of the positioning member 5D, and is continuously lowered, but stops rotating together with the pinion gear 5B. On the other hand, the positioning member 5D returns to a linear shape by elastic force.

FIG. 9, FIG. 10, and FIG. 11 illustrate an operation of the drive mechanism 5. In FIG. 9 to FIG. 11, it is assumed that the rack gear 5A is fixed, and the pinion gear 5B descends by being guided by the guide part 5C similarly to the basic operation.

In the operation illustrated in FIG. 9, when the pinion gear 5B descends, any one of the abutting members 5E abuts on the positioning member 5D of the rack gear 5A. The operation illustrated in FIG. 9 corresponds to a case in which the abutting member 5E abuts on the positioning member 5D on the lower side of the reference line L as in the basic operation illustrated in FIG. 6. Thus, as illustrated in FIG. 9(a), the pinion gear 5B rotates clockwise around the rotation shaft 5Bc due to generation of the moment R. Thereafter, as illustrated in FIG. 9(b) and FIG. 9(c), the pinion gear 5B further rotates clockwise due to further descent. After a while, the abutting member 5E reaches a position where the length of the positioning member 5D does not reach, is separated from the front end of the positioning member 5D, and is continuously lowered, but the pinion gear 5B stops rotating. A position at a rotation angle where the rotation of the pinion gear 5B stops, that is, a position at a rotation angle of an abutting member 5E' that has reached a position where the length of the positioning member 5D does not reach, is a position at a rotation angle where the pinion teeth 5Bb of the pinion gear 5B engage with the rack teeth 5Ab of the rack gear 5A in further descent of the pinion gear 5B. The position at the rotation angle where the pinion teeth 5Bb of the pinion gear 5B engage with the rack teeth 5Ab of the rack gear 5A can be set based on a positional relation suitable for the rotational angle of the pinion teeth 5Bb while the abutting member 5E is disposed to have a relation of [0038] with respect to the number of the pinion teeth 5Bb, the engagement gap E between the rack teeth 5Ab of the rack gear 5A and the pinion teeth 5Bb of the pinion gear 5B maintained by the guide part 5C, and the length of the positioning member 5D.

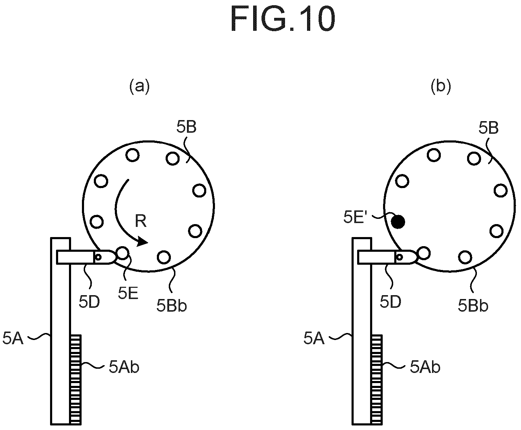

The operation illustrated in FIG. 10 corresponds to a case in which the abutting member 5E abuts on the positioning member 5D on the upper side of the reference line L as in the basic operation illustrated in FIG. 7. Thus, as illustrated in FIG. 10(a), the pinion gear 5B rotates counterclockwise around the rotation shaft 5Bc due to generation of the moment R. Thereafter, as illustrated in FIG. 10(a), the abutting member 5E reaches the position where the length of the positioning member 5D does not reach and is separated from the front end of the positioning member 5D as illustrated in FIG. 7(b), so that the rotation of the pinion gear 5B is stopped. Thereafter, when the pinion gear 5B further descends, the abutting member 5E' (refer to FIG. 10(b)) abuts on the positioning member 5D, the abutting member 5E' next to the abutting member 5E previously separated from the front end of the positioning member 5D. In the pinion gear 5B, the abutting member 5E' has a positional relation similar to that in FIG. 9(b), and becomes the abutting member 5E' in FIG. 9 following (c) and (d). In further descent, the pinion gear 5B is positioned at the rotation angle with which the pinion teeth 5Bb of the pinion gear 5B engage with the rack teeth 5Ab of the rack gear 5A.

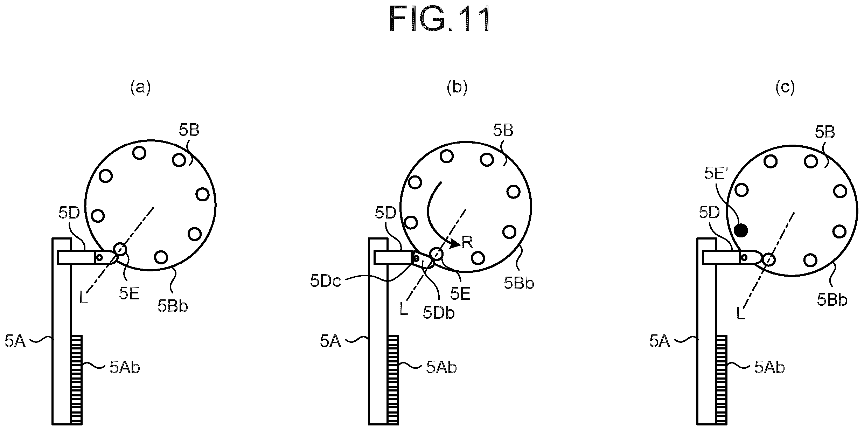

The operation illustrated in FIG. 11 corresponds to a case in which the abutting member 5E abuts on the positioning member 5D on the reference line L as in the basic operation illustrated in FIG. 8. Thus, as illustrated in FIG. 11(b), the pinion gear 5B rotates counterclockwise around the rotation shaft 5Bc due to generation of the moment R. Thereafter, as illustrated in FIG. 11(c), the abutting member 5E reaches the position where the length of the positioning member 5D does not reach and is separated from the front end of the positioning member 5D as illustrated in FIG. 8(c), so that the rotation of the pinion gear 5B is stopped. Thereafter, when the pinion gear 5B further descends, the abutting member 5E' abuts on the positioning member 5D, the abutting member 5E' next to the abutting member 5E previously separated from the front end of the positioning member 5D. In the pinion gear 5B, the abutting member 5E' becomes the abutting member 5E' operating as illustrated in FIG. 9. In further descent, the pinion gear 5B is positioned at the rotation angle with which the pinion teeth 5Bb of the pinion gear 5B engage with the rack teeth 5Ab of the rack gear 5A.

Regarding the drive mechanism 5 according to the embodiment described above, described is a configuration in which ascent and descent of the rack gear 5A are fixed and the pinion gear 5B is caused to descends, but the embodiment is not limited thereto. For example, even when ascent and descent of the pinion gear 5B are fixed and the rack gear 5A is caused to ascend, similarly, the position at the rotation angle with which the pinion teeth 5Bb of the pinion gear 5B engage with the rack teeth 5Ab is achieved. For example, even if the configuration is vertically reversed, that is, even if ascent and descent of the rack gear 5A are fixed and the pinion gear 5B is caused to descend, or ascent and descent of the pinion gear 5B are fixed and the rack gear 5A is caused to ascend, similarly, the position at the rotation angle with which the pinion teeth 5Bb of the pinion gear 5B engage with the rack teeth 5Ab is achieved. For example, even if both of the pinion gear 5B and the rack gear 5A are caused to ascend or descend to be close to each other, similarly, the position at the rotation angle with which the pinion teeth 5Bb of the pinion gear 5B engage with the rack teeth 5Ab is achieved. For example, a moving direction of the rack gear 5A and the pinion gear 5B is not limited to the upper and lower direction. Even if the rack gear 5A and the pinion gear 5B move in any other direction, similarly, the position at the rotation angle with which the pinion teeth 5Bb of the pinion gear 5B engage with the rack teeth 5Ab is achieved.

Herein, the nuclear reactor 100 according to the embodiment is configured such that, in the nuclear reactor vessel 101, the rack gear 5A is disposed in the nuclear reactor vessel main body 101A, at least the pinion gear 5B is disposed on the nuclear reactor vessel lid 101B, and at least the pinion gear 5B can be detached from the nuclear reactor vessel main body 101A together with the nuclear reactor vessel lid 101B. Thus, in the nuclear reactor 100 according to the embodiment, the pinion gear 5B can be detached from the rack gear 5A when the nuclear reactor vessel lid 101B is detached from the nuclear reactor vessel main body 101A, and the pinion gear 5B can be assembled to the rack gear 5A when the nuclear reactor vessel lid 101B is assembled to the nuclear reactor vessel main body 101A. In the nuclear reactor 100 according to the embodiment, disassemble and assemble of the nuclear reactor vessel lid 101B can be performed together with disassemble and assemble of the pinion gear 5B of the drive mechanism 5 (control rod drive mechanism 1).

Herein, the guide part 5C includes the positioning pins 101Ac formed on the opening edge of the nuclear reactor vessel main body 101A in the nuclear reactor 100. The positioning pin 101Ac guides the nuclear reactor vessel lid 101B to be assembled to the nuclear reactor vessel main body 101A, and positions the nuclear reactor vessel lid 101B with respect to the nuclear reactor vessel main body 101A. On the other hand, the first guide part 5CA of the guide part 5C guides the pinion gear 5B, and positions the pinion gear 5B with respect to the rack gear 5A. The pinion gear 5B is disposed on the nuclear reactor vessel lid 101B. Thus, a relation is made such that, in a case of positioning the nuclear reactor vessel lid 101B with respect to the nuclear reactor vessel main body 101A with the positioning pins 101Ac, the pinion gear 5B can be positioned with respect to the rack gear 5A by the first guide part 5CA in a plurality of the control rod drive mechanisms 1. With such a configuration, only by assembling the nuclear reactor vessel lid 101B to the nuclear reactor vessel main body 101A, engaging positions of the pinion gear 5B and the rack gear 5A in the control rod drive mechanisms 1 can be appropriately aligned to achieve engagement.

As described above, the drive mechanism 5 according to the embodiment includes the rack gear 5A, the pinion gear 5B engaging with the rack gear 5A, the positioning member 5D fixed to the portion in the rack gear 5A where the rack teeth 5Ab are not included, and the abutting members 5E disposed along the rotation direction of the pinion gear 5B. In a case of causing at least one of the rack gear 5A and the pinion gear 5B to move in a relative movement direction at the time when the rack gear 5A engages with the pinion gear 5B, abutment between the positioning member 5D and the abutting member 5E defines a rotational position of the pinion teeth 5Bb of the pinion gear 5B to be the engaging position with the rack teeth 5Ab of the rack gear 5A.

With the drive mechanism 5, by moving at least one of the rack gear 5A and the pinion gear 5B by the positioning member 5D and the abutting member 5E, the rotational position of the pinion teeth 5Bb of the pinion gear 5B can be the engaging position with the rack teeth 5Ab of the rack gear 5A. As a result, in the drive mechanism 5 according to the embodiment, the rack gear 5A and the pinion gear 5B can be disassembled and assembled securely and easily.

In the drive mechanism 5 according to the embodiment, the positioning member 5D is configured to be bendable so as to be returned by elastic force.

In the drive mechanism 5, the positioning member 5D is configured to be bendable so as to be returned by elastic force, so that, when the positioning member 5D is bent at the time of abutting on the abutting member 5E, the contact point of the abutting member 5E and the positioning member 5D is shifted to generate the moment R of rotation of the pinion gear 5B, and it is possible to prevent a situation in which an excessive load is applied to the positioning member 5D and the abutting member 5E. As a result, the drive mechanism 5 according to the embodiment can cause the pinion gear 5B to smoothly rotate, and can prevent members from being damaged.

Additionally, the drive mechanism 5 according to the embodiment includes the guide part 5C that maintains the engagement gap E between the rack gear 5A and the pinion gear 5B.

With the drive mechanism 5, engagement accuracy of the rack gear 5A and the pinion gear 5B can be secured by maintaining the engagement gap E between the rack gear 5A and the pinion gear 5B by the guide part 5C. As a result, in the drive mechanism 5 according to the embodiment, the rack gear 5A and the pinion gear 5B can be securely disassembled and assembled.

In the drive mechanism 5 according to the embodiment, the three or more abutting members 5E are disposed along the rotation direction of the pinion gear 5B.

With the drive mechanism 5, the positioning member 5D can be caused to abut on the abutting member 5E at various rotational positions of the pinion gear 5B, and a smooth operation can be implemented. For example, in the drive mechanism 5 according to the embodiment, it is realistic to cause the number of the abutting members 5E to be six to eight satisfying a relational condition in [0038] along the rotation direction of the pinion gear 5B.

Additionally, the control rod drive mechanism 1 according to the embodiment includes the drive mechanism 5 described above, and the drive shaft 6 that is disposed to be able to ascend or descend by the drive mechanism 5 and is coupled to the control rod 104 that can be put in or taken out from the reactor core 103.

The control rod drive mechanism 1 includes the drive mechanism 5 described above, so that it is possible to securely and easily disassemble and assemble the rack gear 5A and the pinion gear 5B for causing the control rod 104 to ascend or descend.

The control rod drive mechanism 1 also includes the drive motor 2, the drive mechanism 5 driven by the drive motor 2, the drive shaft 6 disposed to be able to ascend or descend by the drive mechanism 5 and is coupled to the control rod 104 that can be put in or taken out from the reactor core 103, and the electromagnetic clutch 3 that connects or disconnects transmission of driving force from the drive motor 2 to the drive shaft 6, and all of the configurations described above (the drive motor 2, the electromagnetic clutch 3, the deceleration mechanism 4, the drive mechanism 5, the drive shaft 6, the electromagnetic clutch 3, the reactor core 103, and the control rod 104) are disposed inside the nuclear reactor vessel 101.

In the control rod drive mechanism 1, the drive motor 2, the electromagnetic clutch 3, the deceleration mechanism 4, the drive mechanism 5, and the drive shaft 6 are disposed inside the nuclear reactor vessel 101, so that a configuration for driving the control rod 104 is not provided outside the nuclear reactor vessel 101. That is, the control rod drive mechanism 1 according to the embodiment does not require a nozzle passing through the inside of the nuclear reactor vessel 101 to the outside. Accordingly, by applying the control rod drive mechanism 1 according to the embodiment, it is not necessary to make a design assuming a breakage accident of a weld portion of the nozzle. As a result, with the control rod drive mechanism 1 according to the present embodiment, safety of the nuclear reactor vessel 101 can be improved.

In the control rod drive mechanism 1 according to the embodiment, the drive mechanism 5 is based on the engagement of the pinion gear 5B with the rack gear 5A. The control rod drive mechanism 1 according to the embodiment drives ascent or descent of the drive shaft 6 due to such simple engagement between the rack and the pinion. As a result, with the control rod drive mechanism 1 according to the embodiment, the control rod 104 can be securely driven with a simple configuration in which a fault is hardly caused in a high-temperature environment and an underwater environment.

In the control rod drive mechanism 1 according to the embodiment, the electromagnetic clutch 3 connects or disconnects transmission of driving force from the drive motor 2 to the drive shaft 6. When transmission of driving force from the drive motor 2 to the drive shaft 6 is disconnected, a free descent of the drive shaft 6 can be allowed, and a free fall of the control rod 104 together with the drive shaft 6 can be allowed. Thus, with the control rod drive mechanism 1 according to the embodiment, when the electromagnetic clutch 3 is caused to be in the disconnected state, the control rod 104 freely falls to be inserted into the fuel aggregate 102, so that control can be performed so that a fission reaction of nuclear fuel materials in the fuel aggregate 102 is suppressed to prevent a critical state.

In the control rod drive mechanism 1 according to the embodiment, the drive motor 2 causes the rotor 2A made of magnetic material to rotate by attractive force of a magnetic field generated in the electromagnetic coil 2C of the stator 2B.

In the control rod drive mechanism 1, the drive motor 2 can constitute a reluctance motor without using a permanent magnet. The permanent magnet has low heat resistance, and is difficult to be used inside the nuclear reactor vessel 101 at a high temperature equal to or higher than 350°C. As a result, the control rod drive mechanism 1 according to the present embodiment can be disposed inside the nuclear reactor vessel 101 at a high temperature.

In the control rod drive mechanism 1 according to the embodiment, each of cables of the electromagnetic coils 2C and 3C of the drive motor 2 and the electromagnetic clutch 3 is constituted of the inorganic insulation cable 8.

With the control rod drive mechanism 1, functions of the electromagnetic coils 2C and 3C can be maintained at the time when water intrudes into the stator 2B by using the inorganic insulation cable 8.

In the control rod drive mechanism 1 according to the embodiment, the metal sheath 8b of the inorganic insulation cable 8 is made of heat-resistant and corrosion-resistant alloy.

With the control rod drive mechanism 1, by using heat-resistant and corrosion-resistant alloy for the metal sheath 8b of the inorganic insulation cable 8, heat resistance can be improved, and the functions of the electromagnetic coils 2C and 3C can be maintained in a high-temperature environment.

In the control rod drive mechanism 1 according to the embodiment, the hollow parts 2Ab and 3D are formed on the center axis CL of the rotor 2A of the drive motor 2 while passing therethrough in the axial direction, and the drive shaft 6 is inserted through the hollow parts 2Ab and 3D.

With the control rod drive mechanism 1, the drive shaft 6 is inserted through the hollow parts 2Ab and 3D, so that the drive shaft 6 can be disposed on the center axis CL of the rotor 2A of the drive motor 2, and the device can be downsized.

The control rod drive mechanism 1 according to the embodiment also includes the energizing unit 7 that constantly energizes the drive shaft 6 toward the reactor core 103 side.

With the control rod drive mechanism 1, a load of hindering a free fall is generated by the deceleration mechanism 4 or the drive mechanism 5 in a state in which attraction of the electromagnetic clutch 3 is canceled. However, the energizing unit 7 can encourage a free descent of the drive shaft 6 against this load, and encourage a free fall of the control rod 104 together with the drive shaft 6. As a result, with the control rod drive mechanism 1 according to the embodiment, control can be safely performed to securely suppress a fission reaction of nuclear fuel materials in the fuel aggregate 102 and prevent a critical state. In a case of assuming a nuclear reactor for a ship propulsion reactor, working of the energizing unit 7 as described above has a function of securely inserting the control rod 104 into the inside of the fuel aggregate 102 even when a phenomenon such as tilting, swinging, or overturning of the nuclear reactor (ship) is caused.

The nuclear reactor 100 according to the embodiment includes the control rod drive mechanism 1 described above, the reactor core 103 controlled by the control rod drive mechanism 1, and the nuclear reactor vessel 101 in which the control rod drive mechanism 1 and the reactor core 103 are disposed.

The nuclear reactor 100 includes the control rod drive mechanism 1 including the drive mechanism 5 described above, so that it is possible to securely and easily disassemble and assemble the rack gear 5A and the pinion gear 5B for causing the control rod 104 to ascend or descend. As a result, for the nuclear reactor 100 according to the embodiment, maintenance of the control rod drive mechanism 1 can be safely performed even in a radiation region. With the nuclear reactor 100, drive performance of the control rod drive mechanism 1 can be secured, safety of the nuclear reactor vessel 101 can be improved, the nuclear reactor vessel 101 can be downsized, and the control rod 104 can be securely driven in a high-temperature environment and an underwater environment, so that safe control can be performed.

The present disclosure encompasses the following inventions.

### Reference Signs List

1 Control rod drive mechanism
5 Drive mechanism
5A Rack gear
5Ab Rack teeth
5B Pinion gear
5Bb Pinion teeth
5C Guide part
5D Positioning member
5E Abutting member
6 Drive shaft
100 Nuclear reactor
101 Nuclear reactor vessel
103 Reactor core
104 Control rod

## Claims

1. A drive mechanism comprising:
a rack gear;
a pinion gear engaging with the rack gear;
a positioning member fixed to a portion in the rack gear where rack teeth are not included; and
a plurality of abutting members disposed along a rotation direction of the pinion gear, wherein,
in a case of causing at least one of the rack gear and the pinion gear to move in a relative movement direction at the time when the rack gear engages with the pinion gear, abutment between the positioning member and the abutting member defines a rotational position of pinion teeth of the pinion gear to be an engaging position with the rack teeth of the rack gear.

2. The drive mechanism according to claim 1, wherein the positioning member is configured to be bendable so as to be returned by elastic force.

3. The drive mechanism according to claim 1 or 2, comprising a guide part configured to maintain an engagement gap between the rack gear and the pinion gear.

4. The drive mechanism according to claim 1 or 2, wherein three or more of the abutting members are disposed along a rotation direction of the pinion gear.

5. A control rod drive mechanism comprising:
the drive mechanism according to claim 1; and
a drive shaft disposed to be able to ascend or descend by the drive mechanism and coupled to a control rod that is able to be put in or taken out from a reactor core.

6. A nuclear reactor comprising:
the control rod drive mechanism according to claim 5;
a reactor core controlled by the control rod drive mechanism; and
a nuclear reactor vessel in which the control rod drive mechanism and the reactor core are disposed.
